# EUROPÄISCHE PATENTSCHRIFT

(11) **EP 3 638 498 B1**
(45) Veröffentlichungstag und Bekanntmachung des Hinweises auf die Patenterteilung: **19.05.2021**
(21) Anmeldenummer: 18733162.4
(22) Anmeldetag: 11.05.2018
(51) Int. Cl.: B29D 30/32

(54) **VERFAHREN UND VORRICHTUNG ZUR HERSTELLUNG VON REIFEN**
METHOD AND DEVICE FOR PRODUCING TIRES
PROCÉDÉ ET DISPOSITIF DE FABRICATION DE PNEUMATIQUES

(30) Priorität: 16.06.2017 DE 102017005832
(43) Veröffentlichungstag der Anmeldung: 22.04.2020
(73) Patentinhaber: Harburg-Freudenberger Maschinenbau GmbH, 21079 Hamburg (DE)
(72) Erfinder: WACHTER, Markus, 22926 Ahrensburg (DE); BEHRENS, Achim, 21271 Asendorf (DE); LANGE-KRAUEL, Thomas, 21037 Hamburg (DE)
(74) Vertreter: Klickow & Wetzel PartGmbB
(86) Internationale Anmeldenummer: PCT/DE2018/000144
(87) Internationale Veröffentlichungsnummer: WO 2018/228624

(56) Entgegenhaltungen:
- WO-A1-2012/003823
- DE-A1-102014 001 869

## Beschreibung

Die Erfindung betrifft ein Verfahren zur Herstellung eines Reifenrohlings, bei dem mindestens zwei streifenförmige Materialien auf einer Reifenaufbautrommel positioniert werden und bei dem mindestens zwei Kerne gesetzt werden.

Die Erfindung betrifft darüber hinaus eine Vorrichtung zur Herstellung eines Reifenrohlings, bei dem mindestens zwei streifenförmige Materialien auf einer Reifentrommel positionierbar sind und bei der mindestens zwei Kerne positionierbar sind.

Bei der Herstellung von Reifenrohlingen werden streifenförmige Materialien auf einer Reifenaufbautrommel positioniert. In die elastomeren Materialien sind häufig fadenförmige Materialien (Karkassfäden) zur Verstärkung eingelegt. In seitlichen Bereichen wird jeweils ein Kern zur Verstärkung gesetzt.

Gemäß dem bekannten Stand der Technik wird das verwendete Material auf eine Vorrichtung aufgelegt, die aus Mittel- und Seitenteilen besteht. Verwendete Kerne werden positioniert und von innen geklemmt. Die Innenseite der Kerne wird durch eine Schulter abgestützt und die Kernklemmung bleibt während des gesamten Prozesses aktiv. Durch diese permanente Kernklemmung ist ein Lagenumschlag nur nach oben möglich.

Ein weiterer Nachteil des Standes der Technik besteht darin, dass eine Fadenlänge zwischen den Kernen nicht eindeutig festliegt. Es besteht darüber hinaus keine Möglichkeit, das Material unter den Kern zu arbeiten.

Bislang können die Anforderungen an die Genauigkeit bei der Positionierung der Kerne noch nicht in völlig zufriedenstellender Weise gelöst werden.

Aus der DE 10 2014 001869 A1 sind bereits ein Verfahren und eine Vorrichtung zur Herstellung von Reifenrohlingen bekannt. Unter Verwendung einer Reifenaufbautrommel werden streifenförmige Materialien geeignet positioniert. Der Reifenrohling wird mit Kernen versehen, die geklemmt und fixiert werden.

In der WO 2012/003823 A1 wird ebenfalls ein Verfahren sowie eine Vorrichtung zur Herstellung von Reifenrohlingen beschrieben. Auch hier erfolgt die Herstellung der Reifenrohlinge unter Verwendung einer Reifenaufbautrommel.

Aufgabe der vorliegenden Erfindung ist es ein Verfahren der einleitend genannten Art derart zu verbessern, dass die Positioniergenauigkeit erhöht wird.

Diese Aufgabe wird durch die Merkmale der unabhängigen Ansprüche 1 und 5 gelöst. Weitere Ausführungsformen sind in den abhängigen Ansprüchen definiert.

Weitere Aufgabe der Erfindung ist es, eine Vorrichtung der einleitend genannten Art derart zu konstruiere, dass eine erhöhte Positioniergenauigkeit erreicht wird.

Diese Aufgabe wird erfindungsgemäß dadurch gelöst, dass die Reifenaufbautrommel sowohl mit einer Kernklemmung als auch mit einer Kernfixierung versehen wird.

Erfindungsgemäß ist insbesondere vorgesehen, dass die Reifenaufbautrommel aus einem Mittelteil und zwei beidseitig neben dem Mittelteil angeordneten Trommelhälften ausgebildet wird, dass die Trommelhälften in einer axialen Richtung positionierbar sind, dass das Mittelteil in einer radialen Richtung mit einem veränderlichen Durchmesser versehen wird und dass eine radiale Durchmesservergrößerung des Mittelteiles vor Einsetzen der Kerne durchgeführt wird.
Insbesondere ist daran gedacht, dass die beiden Trommelhälften unabhängig voneinander verfahrbar sind. Die Positionierung kann unter Verwendung mindestens eines Servomotors durchgeführt werden.

Vor dem Einsetzen der Kerne wird das Mittelteil in einer radialen Richtung expandiert und das streifenförmige Material auf der Reifenaufbautrommel wird hierdurch gespannt. Dadurch wird eine lineare Streckung der Karkassfäden erreicht, was zu einer konstanten, zwischen den Kernen eingespannten Fadenlänge in der Karkasse führt. Anschließend können die Kernsetzer die Kerne gegen die Seitenflanken des expandierten Mittelteiles drücken um sie dort zu fixieren.

Das erfindungsgemäße Verfahren ermöglicht es insbesondere, zwischen den Kernen sehr gleichmäßige Fadenlängen bereitzustellen. Dies unterstützt eine runde Ausbildung der Reifen und eine gleichmäßige Materialverteilung.

Die voneinander unabhängige Positionierbarkeit der Trommelhälften ermöglicht es, bei einem einstufigen Aufbau mit Hilfe von Andruckvorrichtungen zwischen die Seitenteile und das Mittelteil zu fahren. Der Reifenrohling kann hierdurch im Seitenwandbereich geformt werden, ohne dass ein Wechsel auf eine andere Trommel erforderlich ist.

In den beigefügten Figuren werden die erfindungsgemäßen Verfahrensschritte sowie die erfindungsgemäße Vorrichtung weiter erläutert. Bei den verwendeten Abkürzungen bedeutet "IL" Inner Liner und somit das innere Streifenmaterial, "BP" bedeutet Body Ply und somit das Körpermaterial.

Erfindungsgemäß wird ein grundsätzlich bekannter zweistufiger Prozess in einer einstufigen Maschine umgesetzt.

Durch die Kombination sowohl einer Kernklemmung als auch einer Kernfixierung im Bereich der Reifenaufbautrommel wird eine deutlich verbesserte Wiederholgenauigkeit bei der Reifenherstellung erreicht.

Die Kombination der Kernklemmung sowie der Kernfixierung ermöglicht es ebenfalls, in einem einstufigen Verfahren Reifen herzustellen, die ansonsten nur in einem zweistufigen Verfahren produzierbar sind.

Insbesondere ist es durch die erfindungsgemäße Merkmalskombination möglich, in einem einstufigen Prozess ein beliebiges Material in die Kerne einzuschlagen.

In einer vorteilhaften Ausführungsform einer erfindungsgemäßen Reifenaufbautrommel werden die Kernfixierungssegmente mithilfe mindestens eines Hebels in die Expand- bzw. Collapse-Position verfahren. Durch diese Zwangsführung ist eine synchrone, zentrische Wulstfixierung gewährleistet.

Bei Verfahren gemäß dem Stand der Technik trat bislang das Problem auf, dass die Kerne beim Bombieren verloren gehen. Gemäß dem erfindungsgemäßen Verfahren und unter Verwendung der erfindungsgemäßen Vorrichtung werden die Kerne nunmehr im Karkassverband gehalten und gehen nicht mehr verloren.

Bislang war der Fachmann davon ausgegangen, dass eine zwei- oder mehrstufige Reifenherstellung zwingend notwendig ist. Erfindungsgemäß wurde erkannt, dass auch eine einstufige Prozessdurchführung möglich ist. Ein wesentlicher erfindungsgemäßer Gedanke besteht somit bereits isoliert darin, einen Reifenherstellungsprozess einstufig zu realisieren.

Zu betonen ist insbesondere auch noch einmal, dass ein wesentlicher erfindungsgemäßer Aspekt darin besteht, dass die Kerne während des gesamten einstufigen Aufbauprozesses durchgehend fixiert bleiben.

In den Zeichnungen sind Ausführungsbeispiele der Erfindung schematisch dargestellt. Es zeigen:
- Fig. 1: Eine Seitenansicht einer Reifenaufbautrommel, die mit einer Kernklemmung und einer Kernfixierung ausgestattet ist,
- Fig. 2: ein Längsschnitt durch die Reifenaufbautrommel gemäß Fig. 1,
- Fig. 3: eine schematische Darstellung der Trommel in einem Flachzustand,
- Fig. 4: die Trommel gemäß Fig. 3 in einem Flachzustand mit aufgelegtem Material,
- Fig. 5: die Reifenaufbautrommel mit einer expandierten Kernfixierung und nach außen verschobener Center-Vorrichtung,
- Fig. 6: die Reifenaufbautrommel mit von außen gehaltenen Kernen sowie zur Straffung des Materials gesetzten Kernen,
- Fig. 7: die Reifenaufbautrommel mit von außen gehaltenen und gesetzten Kernen,
- Fig. 8: die Reifenaufbautrommel nach einem erfolgten Lagenumschlag und gesetzten sowie am Mittelteil gehaltenen Kernen,
- Fig. 9: die Reifenaufbautrommel mit einem fest auf dem Mittelteil aufsetzenden Materialpaket,
- Fig. 10: die Reifenaufbautrommel nach einem Umschlagen des Materials bis unter den Kern,
- Fig. 11: die Reifenaufbautrommel mit zusammengefahrenen Trommelhälften,
- Fig. 12: die Reifenaufbautrommel bei einer mit wenig Druck expandierten Kernfixierung und
- Fig. 13: die Reifenaufbautrommel mit einem komplett fixierten Karkasspaket, das mit Druck beaufschlagt wird und sich zur Mitte anhebt,
- Fig. 14: eine perspektivische Ansicht einer erfindungsgemäßen Reifenaufbautrommel und zwei Seitenansichten erfindungsgemäßer Reifenaufbautrommeln,
- Fig. 15: einen Längsschnitt durch eine erfindungsgemäße Reifenaufbautrommel mit Zwangsführung der Kernfixierung,
- Fig. 16: einen Längsschnitt durch eine erfindungsgemäße Reifenaufbautrommel mit Zwangsführung der Kernfixierung und Center Sleeve,
- Fig. 17: einen Längsschnitt durch eine erfindungsgemäße Reifenaufbautrommel mit Zwangsführung der Kernfixierung, Center Sleeve und Verstärkungsstreifentaschen,
- Fig. 18: einen Längsschnitt durch die in Fig. 17 gezeigte Reifenaufbautrommel mit aktiviertem Unterdruck zum Ausbilden von Verstärkungsstreifentaschen.

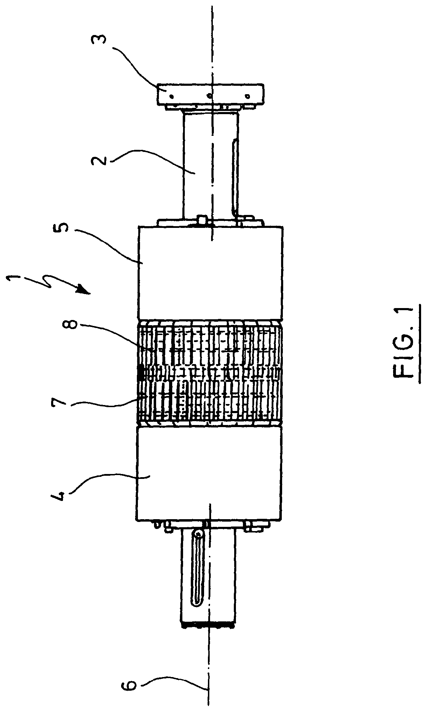

Figur 1 zeigt eine Reifenaufbautrommel (1) zur Verwendung als Vorrichtung zur Herstellung eines Reifenrohlings. Die Reifenaufbautrommel (1) ist auf einer Welle (2) fixiert. Die Welle (2) ist im Bereich eines Lagers (3) drehbeweglich geführt.

In einer Längsrichtung (6) zwischen den Trommelhälften (4, 5) sind zwei Mittelteile (7, 8) angeordnet.

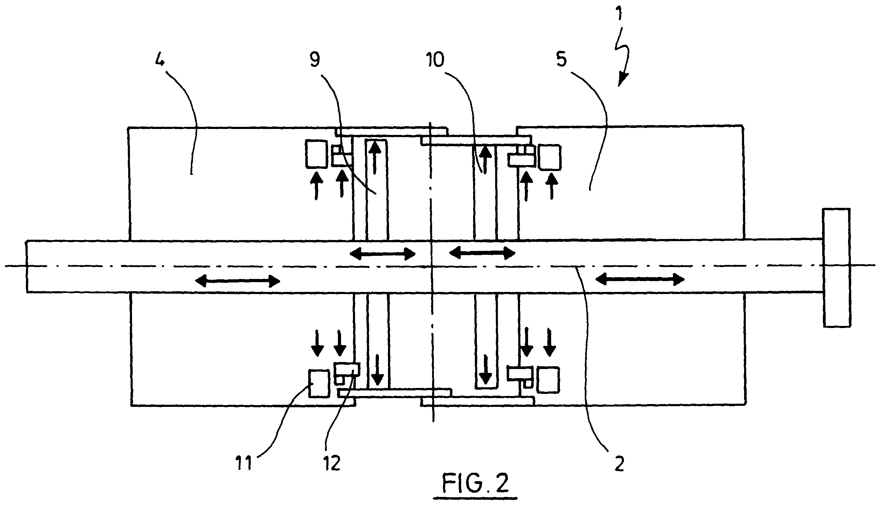

Figur 2 zeigt einen Längsschnitt durch die Reifenaufbautrommel (1) gemäß Figur 1. Es ist zu erkennen, dass die Trommelhälften (4, 5) entlang der Welle (2) verschiebbar angeordnet sind. Zwischen den Trommelhälften (4, 5) sind Center-Vorrichtungen (9, 10) angeordnet. Zu erkennen sind darüber hinaus eine Kernklemmung (11) sowie eine Kernfixierung (12). Grundsätzlich läuft der Verfahrensablauf entsprechend der nachfolgend erläuterten Prozessschritte ab. In einem ersten Schritt wird durch ein Ausfahren der Center-Vorrichtung (9, 10) das Material vorgespannt. Anschließend werden die Kerne seitlich gegen die Center-Vorrichtung (9, 10) gesetzt und von innen beklemmt. Das Material wird dabei weiter gestrafft. Anschließend wird das Material auf die Center-Vorrichtung (9, 10) umgeschlagen. In einem abschließenden Prozessschritt wird die Kernklemmung (11) gelöst und die Trommelhälften (4, 5) werden nach außen verfahren.

Durch das Verfahren der Trommelhälften (4, 5) entsteht ein Freiraum zwischen der Center-Vorrichtung (9, 10) und den Trommelhälften (4, 5). Es kann dann weiteres Material aufgelegt werden. Das Material wird dann mit einem Anroller bis unter den Kern umgeschlagen.

In einem nächsten Prozessschritt verfahren die Trommelhälften (4, 5) zur Center-Vorrichtung (9, 10) und die Kernfixierung (12) wird unter den Kern in Position gebracht. Durch die Prozessschritte eines zunächst leichten Expandierens, dann des Zusammenfahrens und anschließend des vollen Expandierens wird im Zusammenwirken mit der Center-Vorrichtung (9, 10) der Kern voll fixiert. Eine Fortsetzung des Prozesses erfolgt in einem erforderlichen Umfang.

Die vorstehend komprimiert erläuterten einzelnen Prozessschritte werden nachfolgend anhand der weiteren Figuren im Detail erläutert.

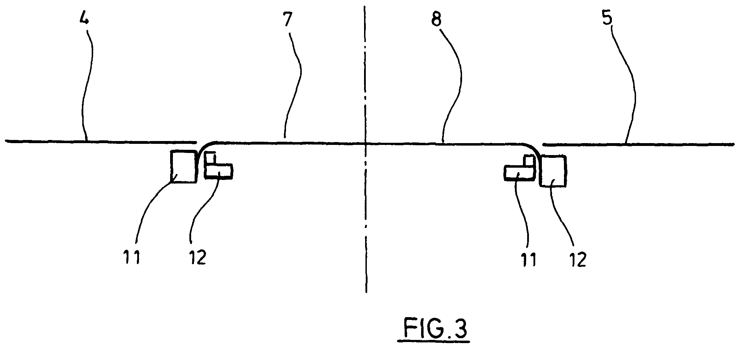

Figur 3 zeigt die Reifenaufbautrommel (1) in einem Flachzustand. Zu erkennen sind die Trommelhälften (4, 5), die Mittelteile (7, 8) sowie die Kernklemmung (11) und die Kernfixierung (12).

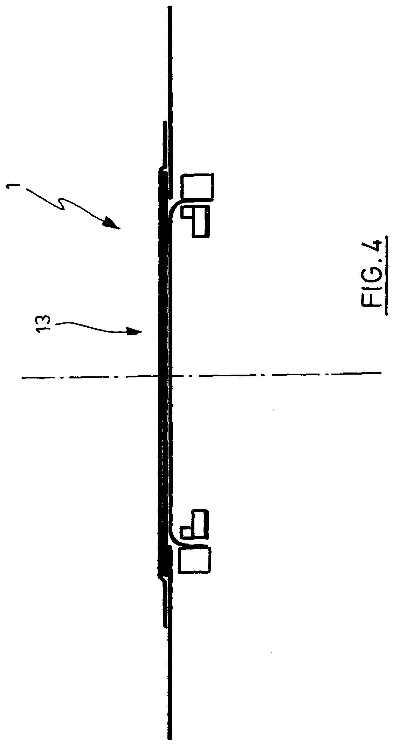

Gemäß Figur 4 befindet sich die Reifenaufbautrommel (1) weiterhin im Flachzustand. Das Material (13) ist aufgelegt.

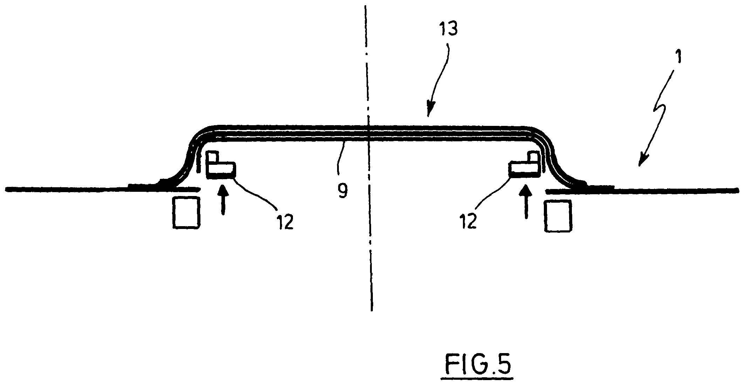

Gemäß dem in Figur 5 dargestellten Prozessschritt ist die Kernfixierung (12) expandiert und hebt hierbei die Center-Vorrichtung (9) nach außen. Das Material (13) wird hierdurch gestrafft.

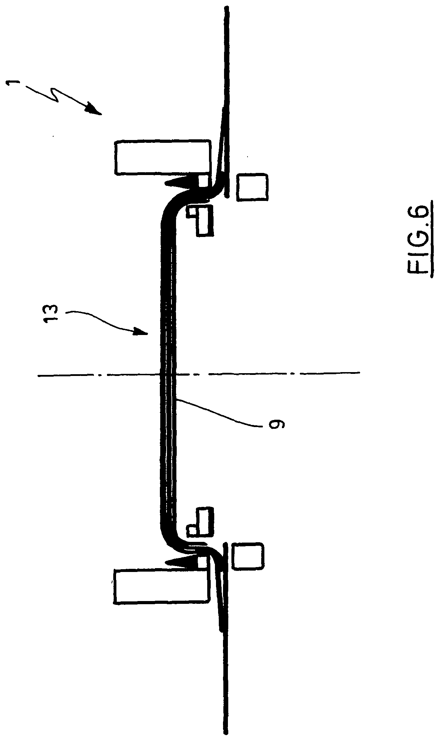

Gemäß den in Figur 6 dargestellten Prozessschritten sind die Kerne über die Vorrichtung definiert und werden von außen gehalten. Die Kerne sind gesetzt und das Material wird hierdurch weiter gestrafft. Der Kernsetzabstand beziehungsweise der Abstand von Kern zu Kern ist durch die Center-Vorrichtung (9) exakt vorgegeben und somit deutlich definierter als bei Prozessen gemäß dem Stand der Technik.

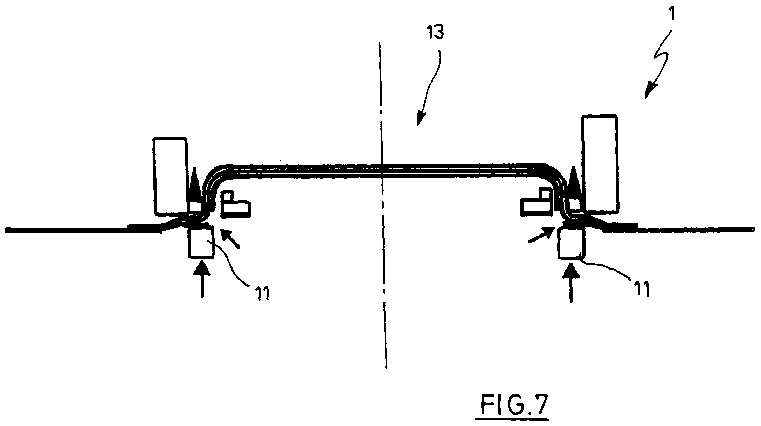

Gemäß dem in Figur 7 dargestellten Prozessschritt werden die Kerne über die Vorrichtung definiert und von außen gehalten. Die Kerne sind gesetzt und die Kerne werden durch die expandierende Kernklemmung (11) von unten geklemmt. Es wird hierbei ein vorderer Teil eines Balges angehoben und strafft das Material (13) hierdurch nochmals.

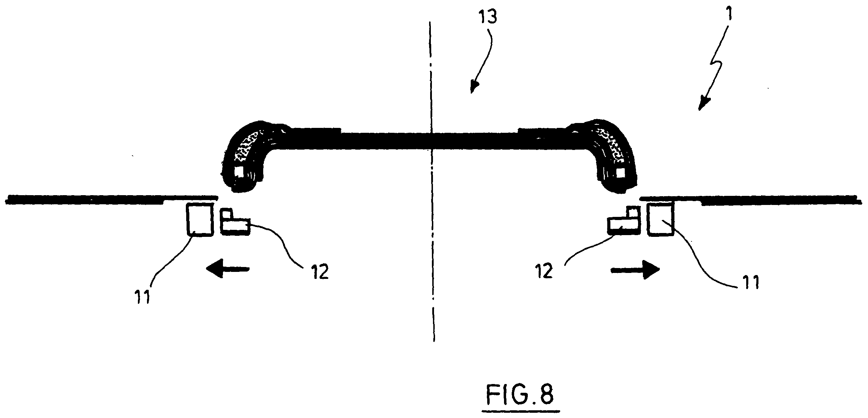

Gemäß dem in Figur 8 dargestellten Prozessschritt ist der Lagenumschlag erfolgt und die Kerne sind gesetzt und definiert am Mittelteil gehalten. Durch den Materialverbund sitzt das Materialpaket (13) fest auf dem Mittelteil. Die Kernklemmung (11) ist eingefahren und ebenfalls ist die Kernfixierung (12) eingefahren. Die Trommelhälften (4, 5) können auseinanderfahren.

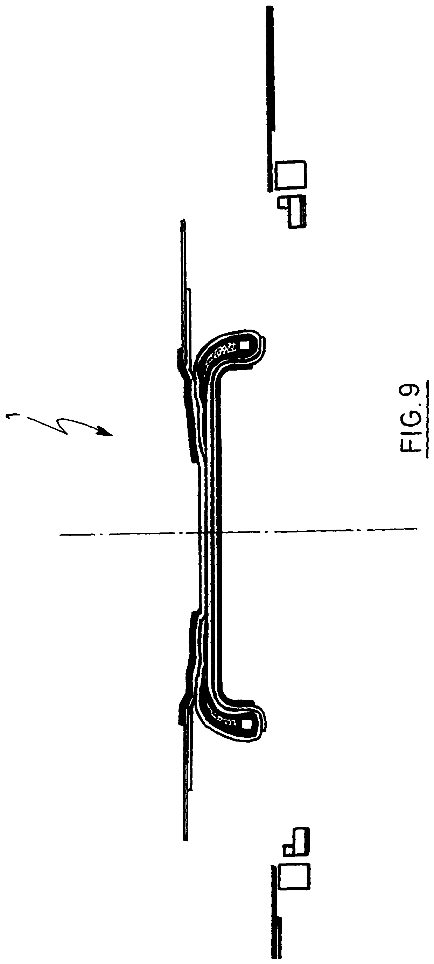

Gemäß dem in Figur 9 dargestellten Prozessschritt sind die Kerne gesetzt und definiert am Mittelteil gehalten. Durch den Materialverbund sitzt das Materialpaket (13) fest auf dem Mittelteil. Die beiden Trommelhälften (4, 5) sind auseinandergefahren. Es entsteht hierdurch ein Freiraum zwischen den Trommelhälften (4, 5) und der Center-Vorrichtung (9, 10). In einem nächsten Schritt wird das Material aufgelegt.

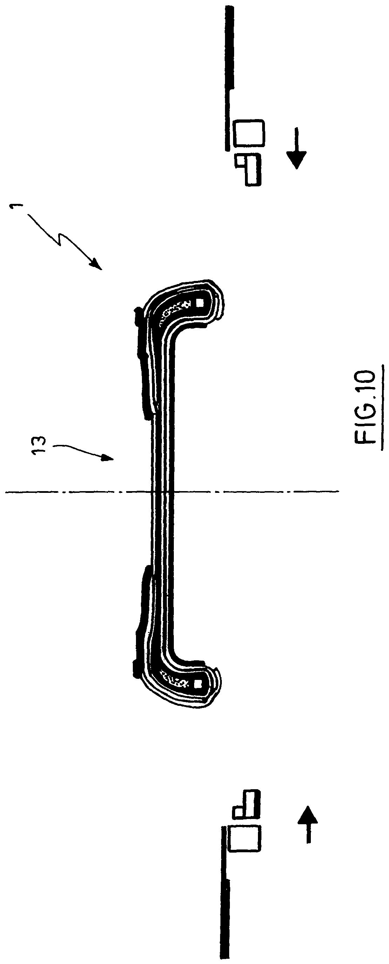

Gemäß dem in Figur 10 dargestellten Prozessschritt ist das Material (13) bis unter den Kern umgeschlagen und die beiden Trommelhälften (4, 5) fahren zusammen.

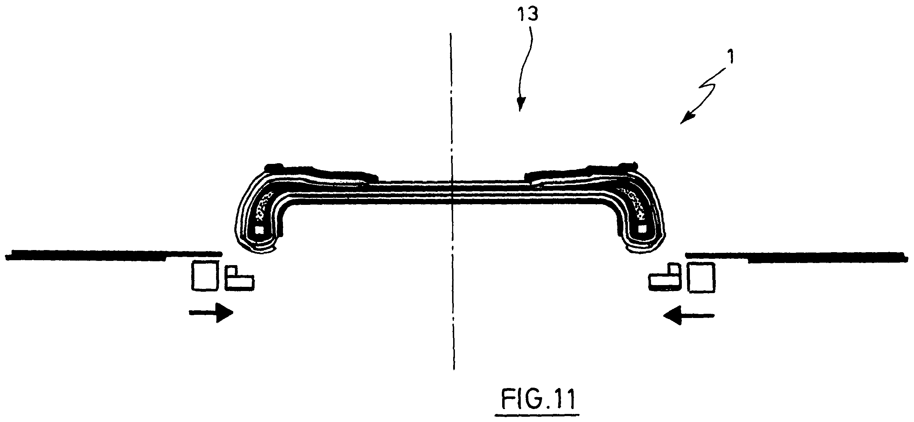

Gemäß dem in Figur 11 dargestellten Prozessschritt fahren die beiden Trommelhälften (4, 5) zusammen und die Kernfixierung (12) befindet sich in Position unter den Kernen.

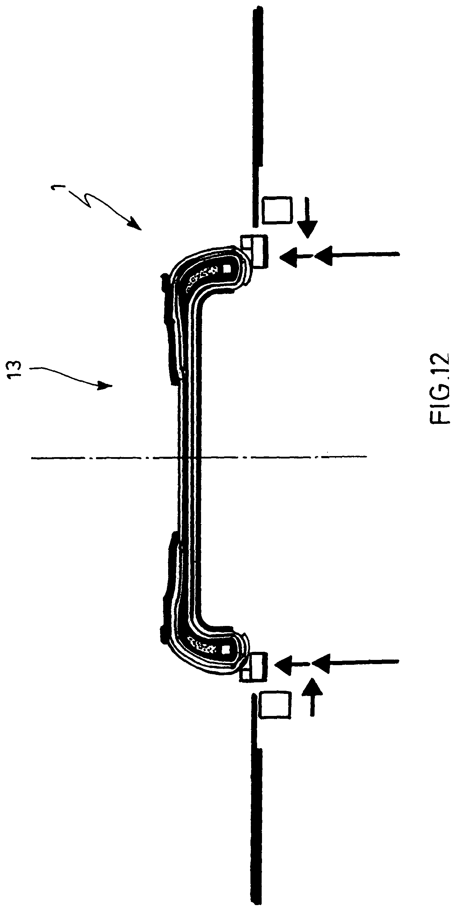

Gemäß dem in Figur 12 dargestellten Prozessschritt expandiert die Kernfixierung (12) mit wenig Druck und die Trommelhälften (4, 5) verfahren in Richtung der Trommelmitte, um den Kern mit der äußeren Anlagekante der Kernfixierung (12) festzusetzen. Die Kernfixierung (12) expandiert dann mit hohem Druck, um den Kern vollständig zu fixieren.

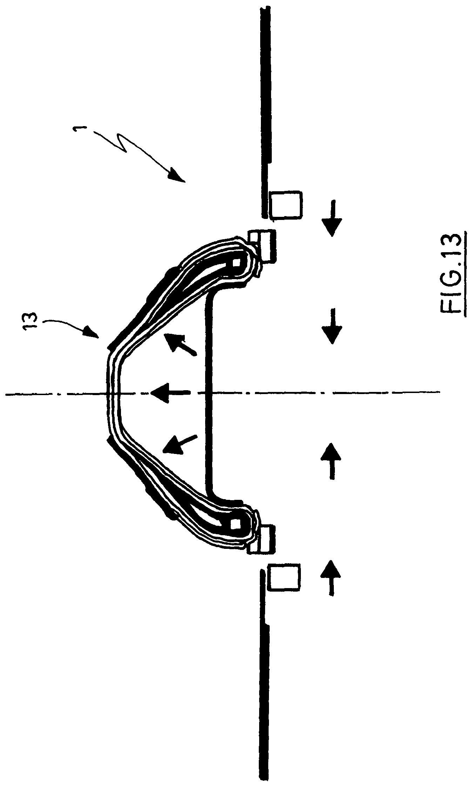

Gemäß dem in Figur 13 dargestellten Prozessschritt wird das komplett fixierte Karkasspaket mit Druck beaufschlagt und hebt sich in der Mitte an. Parallel zu diesem Ablauf fahren die Trommelhälften (4, 5) und die Center-Vorrichtung (9, 10) zusammen. Durch den zu jedem Prozesszeitpunkt definierten Abstand zwischen den Kernen ist eine hervorragende Gleichförmigkeit der Reifen zu erreichen. Ebenfalls trägt zu dieser Gleichförmigkeit bei, dass der Kern während des gesamten Prozesses unterstützt ist.

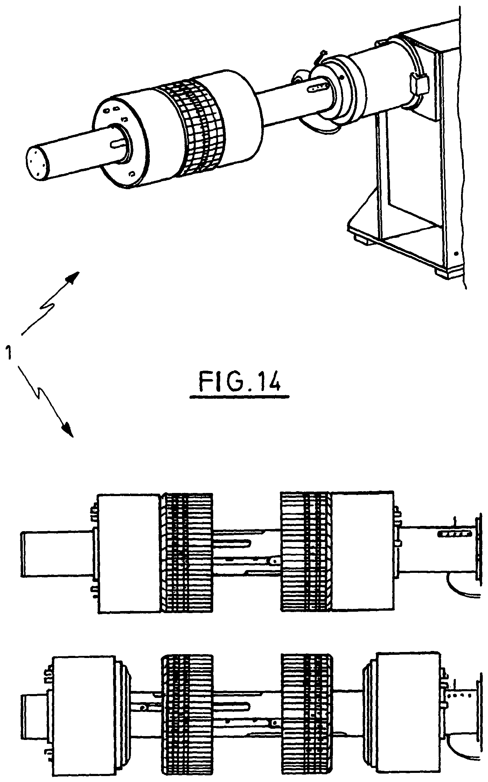

Figur 14 zeigt zur Verdeutlichung weitere Ansichten der Reifenaufbautrommel (1) in unterschiedlichen Positionierungen der Einzelteile.

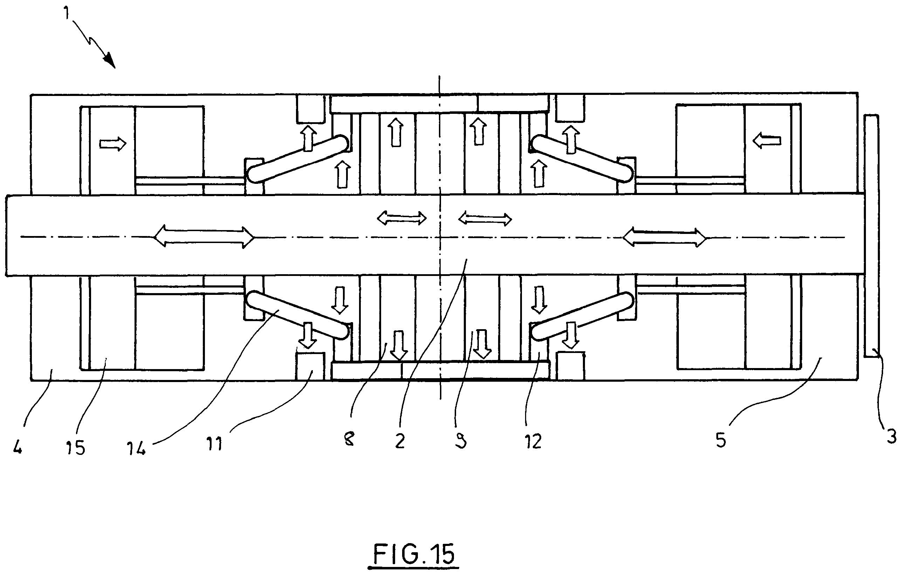

Gemäß der in Figur 15 gezeigten Ausführungsform einer erfindungsgemäßen Reifenaufbautrommel (1) wird die Kernfixierung (12) über einen Hebel (14) zwangsgeführt. Der Hebel (14) ist in der dargestellten vorteilhaften Ausführungsform als Kniehebel ausgeführt und wird mithilfe eines Schubzylinders (15) angetrieben. Es sind jedoch auch andere Hebel- und Antriebsformen denkbar. Je nach relativer Positionierung von Mittenteil (7, 8) und Trommelhälften (4, 5) kann die Kernfixierung (12) neben oder auch unter den Mittenteilen (7, 8) in radialer Richtung verfahren werden. Somit kann insbesondere auch eine expandierte Stellung der Center-Vorrichtung (9, 10) mithilfe der Kernfixierung (12) erreicht werden.

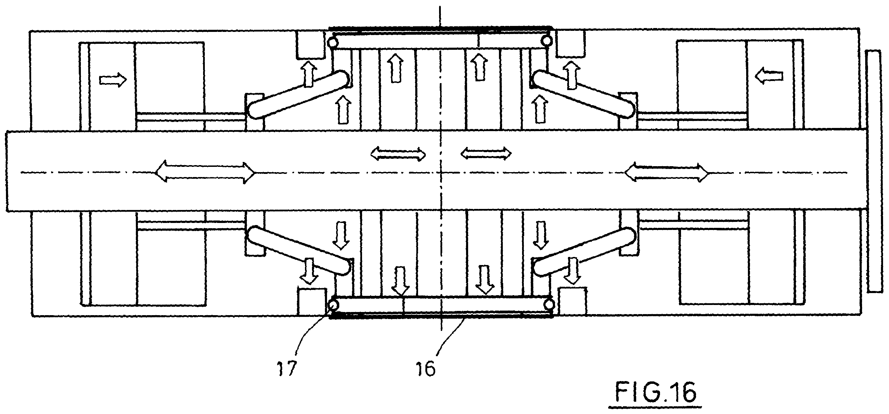

Figur 16 zeigt eine erfindungsgemäße Ausführungsform einer Reifenaufbautrommel (1) mit einem Center Sleeve (16). Das Center Sleeve (16) deckt die Mittenteile (7, 8) ab und ermöglicht somit eine Ausführung der Mittenteile (7, 8) als geschlossenen zylindrischen Körper. Das Center Sleeve (16) besteht in vorteilhafter Ausführung aus sowohl in radialer als auch in axialer Richtung dehnbarem Material. Fixiert wird das Center Sleeve (16) im äußeren Bereich der Segmentfinger der Mittenteile (7, 8) mittels einer Center Sleeve Einfassung (17).

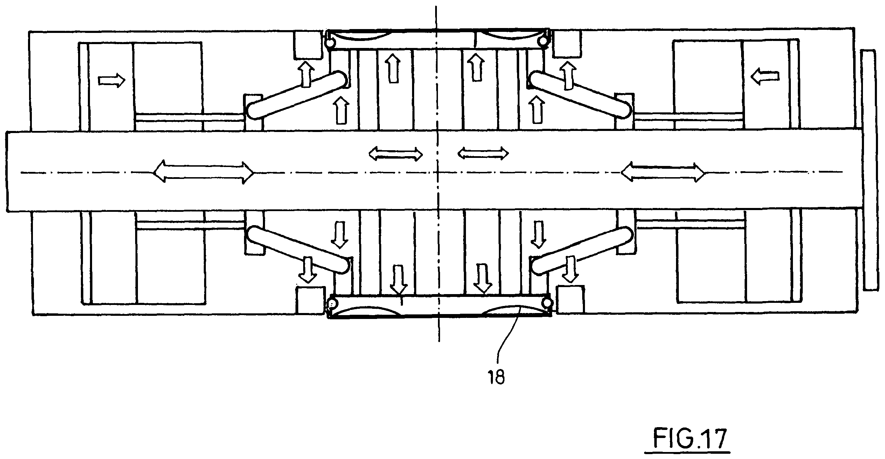

In Figur 17 ist eine Ausführungsform einer erfindungsgemäßen Reifenaufbautrommel (1) mit Verstärkungssteifentaschen (18) dargestellt. Die Verstärkungsstreifentaschen (18) werden durch radial umlaufende Aussparungen in den Mittenteilen (7, 8) gebildet und werden in der dargestellten Ausführungsform nach außen von einem Center Sleeve (16) begrenzt. Der Zweck der Verstärkungsstreifentaschen (18) ist die herstellungstechnische Begünstigung der Produktion von Reifen mit Verstärkungsstreifen im Seitenwandbereich. In Anlehnung an die Verstärkungsstreifenkontur werden inboard- und outboardseitig Taschen (18) in den Fingersegmenten der Mittenteile (7, 8) vorgesehen.

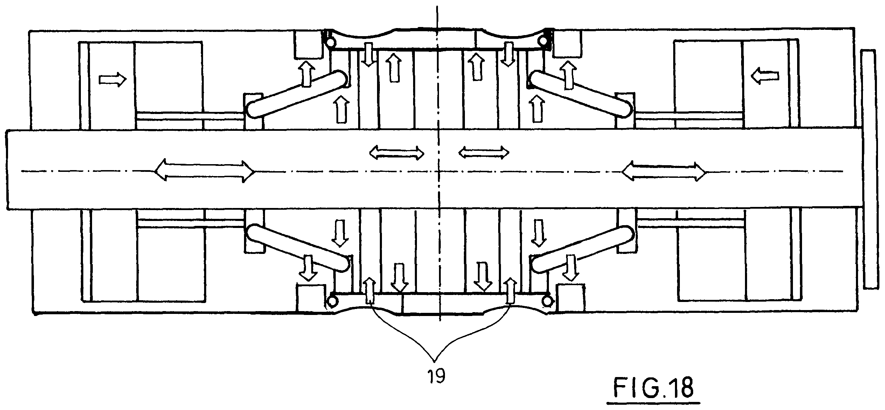

Figur 18 zeigt die in Figur 17 dargestellte Ausführungsform einer erfindungsgemäßen Reifenaufbautrommel (1). Mithilfe eines Unterdruckes (19) wird das Center Sleeve (16) in die in den Fingersegmenten der Mittenteile (7, 8) angelegten Verstärkungsstreifentaschen (18) gesogen und gibt so die für das Einbringen von Verstärkungsstreifen in einer definierten Position notwendige Kontur frei. Insbesondere ist dies für die Fertigung von Reifen mit Seitenwandverstärkung bzw. mit "Run-on-Flat"-Option von Bedeutung. Da die Verstärkungsstreifen dank der erfindungsgemäßen Kontur der Mittenteile (7, 8) in den Verstärkungsstreifentaschen (18) liegen, wird für einen weiteren Streifen eine im Wesentlichen ebene Auflagefläche bereitgestellt.

## Patentansprüche

1. Verfahren zur Herstellung eines Reifenrohlings, bei dem mindestens zwei streifenförmige Materialien auf einer Reifenaufbautrommel (1) positioniert werden und bei dem mindestens zwei Kerne gesetzt werden, wobei die Reifenaufbautrommel (1) sowohl mit einer Kernklemmung (11) als auch mit einer Kernfixierung (12) versehen wird, und die Reifenaufbautrommel (1) aus einem Mittelteil (7, 8) und zwei beidseitig neben dem Mittelteil (7, 8) angeordneten Trommelhälften (4, 5) ausgebildet wird **dadurch gekennzeichnet dass** Fingersegmente der Mittelteile (7, 8) mit einer Kontur ausgeführt sind, die Taschen (18) ausbildet, die die Aufnahme von Verstärkungsstreifen ermöglichen.

2. Verfahren und Vorrichtung nach Anspruch 1, **dadurch gekennzeichnet, dass** die Trommelhälften (4, 5) in einer axialen Richtung positionierbar sind.

3. Verfahren nach einem der Ansprüche 1 bis 2, **dadurch gekennzeichnet, dass** das Mittelteil (7, 8) in einer radialen Richtung (6) mit einem veränderlichen Durchmesser versehen wird.

4. Verfahren nach einem der Ansprüche 1 bis 3, **dadurch gekennzeichnet, dass** eine radiale Durchmesservergrößerung des Mittelteils (7, 8) vor einem Setzen der Kerne durchgeführt wird.

5. Vorrichtung zur Herstellung eines Reifenrohlings, bei der mindestens zwei streifenförmige Materialien auf einer Reifenaufbautrommel (1) positioniert werden und bei der mindestens zwei Kerne gesetzt werden, wobei die Reifenaufbautrommel (1) sowohl mit einer Kernklemmung (11) als auch mit einer Kernfixierung (12) versehen wird, und die Reifenaufbautrommel (1) aus einem Mittelteil (7, 8) und zwei beidseitig neben dem Mittelteil (7, 8) angeordneten Trommelhälften (4, 5) ausgebildet wird, **dadurch gekennzeichnet dass** Fingersegmente der Mittelteile (7, 8) mit einer Kontur ausgeführt sind, die Taschen (18) ausbildet, die die Aufnahme von Verstärkungsstreifen ermöglichen.

6. Vorrichtung nach Anspruch 5, **dadurch gekennzeichnet, dass** die Trommelhälften (4, 5) in einer axialen Richtung positionierbar sind.

7. Vorrichtung nach einem der Ansprüche 5 bis 6, **dadurch gekennzeichnet, dass** das Mittelteil (7, 8) in einer radialen Richtung (6) mit einem veränderlichen Durchmesser versehen ist.

8. Vorrichtung nach einem der Ansprüche 5 bis 7, **dadurch gekennzeichnet, dass** eine lineare Streckung der Karkassfäden durch eine radiale Durchmesservergrößerung des Mittelteils (7, 8) vor einem Setzen der Kerne durchführbar ist.

9. Vorrichtung nach Anspruch 6, **dadurch gekennzeichnet, dass** die Trommelälften (4, 5) unabhängig voneinander positionierbar sind.

10. Vorrichtung nach Anspruch 5 oder 6, **dadurch gekennzeichnet, dass** mindestens ein Kernsetzer in einer axialen Richtung positionierbar ist.

11. Vorrichtung nach einem der Ansprüche 5 oder 6, **dadurch gekennzeichnet, dass** der Kernsetzer in einer axialen Richtung gegenüber einem expandierten Mittelteil (7, 8) verspannbar ist.

12. Vorrichtung nach einem der Ansprüche 5 bis 11, **dadurch gekennzeichnet, dass** eine Kernfixierung (12) wahlweise mit einem geringeren oder einem höheren Druck expandierbar ist.

13. Vorrichtung nach einem der Ansprüche 5 bis 12, **dadurch gekennzeichnet, dass** eine Kernklemmung (11) und eine Kernfixierung (12) unabhängig voneinander positionierbar sind.

14. Vorrichtung nach einem der Ansprüche 5 bis 13, **dadurch gekennzeichnet, dass** die Kernfixierung (12) als eine Außenschulter ausgebildet ist. Die Kernfixierungssegmente sind mittels Hebeln in die Expand- bzw. Collapse-Position verfahrbar und gewährleisten durch ihre Zwangsführung eine synchrone und zentrische Wulstfixierung.

15. Vorrichtung nach einem der Ansprüche 5 bis 14, **dadurch gekennzeichnet, dass** die Trommelhälften (4, 5) sowie eine Center-Vorrichtung (9, 10) zur Ausbildung eines Freiraumes positionierbar sind.

16. Vorrichtung nach einem der Ansprüche 5 bis 15, **dadurch gekennzeichnet, dass** die Center-Vorrichtungen (9, 10) ohne die Trommelhälften (4, 5) in einer expandierten Stellung positionierbar sind. Die expandierte Stellung ist durch Expandieren der Kernfixierung (12) der beiden Trommelhälften (4, 5) erreichbar, wobei die Kernfixierungen (12) der Trommelhälften (4, 5) unter den Außenseiten der Mittelteile (7, 8) positioniert sind.

17. Vorrichtung nach einem der Ansprüche 5 bis 16, **dadurch gekennzeichnet, dass** die Mittenteile (7, 8) der Reifenaufbautrommel (1) mit einem Center Sleeve (16) abgedeckt sind, wobei das Center Sleeve (16) im äußeren Bereich der Segmentfinger mit diesen verbunden ist.

## Claims

1. Method for producing a tyre blank, in which method at least two strip-shaped materials are positioned on a tyre-building drum (1), and in which method at least two cores are set in place, wherein the tyre-building drum (1) is provided both with a core clamping element (11) and with a core fixing element (12), and the tyre-building drum (1) is formed by a middle part (7, 8) and two drum halves (4, 5) disposed laterally on both sides of the middle part (7, 8), **characterized in that** finger segments of the middle parts (7, 8) are embodied with a contour which forms pockets (18) which enable reinforcing strips to be received.

2. Method and device according to Claim 1, **characterized in that** the drum halves (4, 5) are able to be positioned in an axial direction.

3. Method according to either of Claims 1 and 2, **characterized in that** the middle part (7, 8) in a radial direction (6) is provided with a variable diameter.

4. Method according to one of Claims 1 to 3, **characterized in that** a radial diameter enlargement of the middle part (7, 8) is carried out prior to the cores being set in place.

5. Device for producing a tyre blank, in which device at least two strip-shaped materials are positioned on a tyre-building drum (1), and in which device at least two cores are set in place, wherein the tyre-building drum (1) is provided both with a core clamping element (11) and with a core fixing element (12), and the tyre-building drum (1) is formed by a middle part (7, 8) and two drum halves (4, 5) disposed laterally on both sides of the middle part (7, 8), **characterized in that** finger segments of the middle parts (7, 8) are embodied with a contour which forms pockets (18) which enable reinforcing strips to be received.

6. Device according to Claim 5, **characterized in that** the drum halves (4, 5) are able to be positioned in an axial direction.

7. Device according to either of Claims 5 and 6, **characterized in that** the middle part (7, 8) in a radial direction (6) is provided with a variable diameter.

8. Device according to one of Claims 5 to 7, **characterized in that** a linear stretching of the carcass threads is able to be carried out by a radial diameter enlargement of the middle part (7, 8) prior to the cores being set in place.

9. Device according to Claim 6, **characterized in that** the drum halves (4, 5) are able to be positioned in a mutually independent manner.

10. Device according to Claim 5 or 6, **characterized in that** at least one core setter is able to be positioned in an axial direction.

11. Device according to either of Claims 5 and 6, **characterized in that** the core setter is able to be braced in an axial direction in relation to an expanded middle part (7, 8).

12. Device according to one of Claims 5 to 11, **characterized in that** a core fixing element (12) is able to be expanded selectively at a lower or a higher pressure.

13. Device according to one of Claims 5 to 12, **characterized in that** a core clamping element (11) and a core fixing element (12) are able to be positioned in a mutually independent manner.

14. Device according to one of Claims 5 to 13, **characterized in that** the core fixing element (12) is configured as an outer shoulder. The core fixing elements by means of levers are able to be moved to the expand or collapse position, respectively, and said core fixing elements, on account of the forced guiding thereof, guarantee synchronous and centric fixing of the bead.

15. Device according to one of Claims 5 to 14, **characterized in that** the drum halves (4, 5) as well as a centre device (9, 10) are able to be positioned so as to configure a clearance.

16. Device according to one of Claims 5 to 15, **characterized in that** the centre devices (9, 10) without the drum halves (4, 5) are able to be positioned in an expanded position. The expanded position is able to be achieved by expanding the core fixing elements (12) of the two drum halves (4, 5), wherein the core fixing elements (12) of the drum halves (4, 5) are positioned below the outer sides of the middle parts (7, 8).

17. Device according to one of Claims 5 to 16, **characterized in that** the middle parts (7, 8) of the tyre-building drum (1) are covered by a centre sleeve (16), wherein the centre sleeve (16) in the outer region of the segment fingers is connected to the latter.

## Revendications

1. Procédé de fabrication d'un pneumatique cru, dans lequel au moins deux matériaux en forme de bande sont positionnés sur un tambour de confection de pneumatique (1), et dans lequel au moins deux noyaux sont mis en place, le tambour de confection de pneumatique (1) étant équipé à la fois d'un dispositif de serrage de noyau (11) et d'un dispositif de fixation de noyau (12), et le tambour de confection de pneumatique (1) étant réalisé à partir d'une partie centrale (7, 8) et de deux moitiés de tambour (4, 5) disposées des deux côtés près de la partie centrale (7, 8),
**caractérisé en ce que** des segments en forme de doigts des parties centrales (7, 8) sont réalisés avec un contour formant des poches (18) qui permettent de recevoir des bandes de renforcement.

2. Procédé et dispositif selon la revendication 1, **caractérisé en ce que** les moitiés de tambour (4, 5) peuvent être positionnées dans une direction axiale.

3. Procédé selon l'une quelconque des revendications 1 à 2, **caractérisé en ce que** la partie centrale (7, 8) est équipée d'un diamètre variable dans une direction radiale (6).

4. Procédé selon l'une quelconque des revendications 1 à 3, **caractérisé en ce qu'**un agrandissement de diamètre radial de la partie centrale (7, 8) est effectué avant une mise en place des noyaux.

5. Dispositif de fabrication d'un pneumatique cru, dans lequel au moins deux matériaux en forme de bande sont positionnés sur un tambour de confection de pneumatique (1), et dans lequel au moins deux noyaux sont mis en place, le tambour de confection de pneumatique (1) étant équipé à la fois d'un dispositif de serrage de noyau (11) et d'un dispositif de fixation de noyau (12), et le tambour de confection de pneumatique (1) étant réalisé à partir d'une partie centrale (7, 8) et de deux moitiés de tambour (4, 5) disposées des deux côtés près de la partie centrale (7, 8),
**caractérisé en ce que** des segments en forme de doigts des parties centrales (7, 8) sont réalisés avec un contour formant des poches (18) qui permettent de recevoir des bandes de renforcement.

6. Dispositif selon la revendication 5, **caractérisé en ce que** les moitiés de tambour (4, 5) peuvent être positionnées dans une direction axiale.

7. Dispositif selon l'une quelconque des revendications 5 à 6, **caractérisé en ce que** la partie centrale (7, 8) est munie d'un diamètre variable dans une direction radiale (6).

8. Dispositif selon l'une quelconque des revendications 5 à 7, **caractérisé en ce qu'**un allongement linéaire des fils de carcasse peut être effectué par un agrandissement de diamètre radial de la partie centrale (7, 8) avant une mise en place des noyaux.

9. Dispositif selon la revendication 6, **caractérisé en ce que** les moitiés de tambour (4, 5) peuvent être positionnées indépendamment l'une de l'autre.

10. Dispositif selon la revendication 5 ou 6, **caractérisé en ce qu'**au moins un dispositif de mise en place de noyau peut être positionné dans une direction axiale.

11. Dispositif selon l'une quelconque des revendications 5 ou 6, **caractérisé en ce que** le dispositif de mise en place de noyau peut être serré dans une direction axiale par rapport à une partie centrale expansée (7, 8).

12. Dispositif selon l'une quelconque des revendications 5 à 11, **caractérisé en ce qu'**un dispositif de fixation de noyau (12) peut être expansé au choix par une pression inférieure ou supérieure.

13. Dispositif selon l'une quelconque des revendications 5 à 12, **caractérisé en ce qu'**un dispositif de serrage de noyau (11) et un dispositif de fixation de noyau (12) peuvent être positionnés indépendamment l'un de l'autre.

14. Dispositif selon l'une quelconque des revendications 5 à 13, **caractérisé en ce que** le dispositif de fixation de noyau (12) est réalisé sous la forme d'une épaule extérieure. Les segments de dispositif de fixation de noyau sont déplaçables au moyen de leviers dans la position d'expansion ou d'affaissement et assurent par leur guidage forcé une fixation de bourrelet centrée synchrone.

15. Dispositif selon l'une quelconque des revendications 5 à 14, **caractérisé en ce que** les moitiés de tambour (4, 5) ainsi qu'un dispositif de centrage (9, 10) peuvent être positionnés pour réaliser un espace libre.

16. Dispositif selon l'une quelconque des revendications 5 à 15, **caractérisé en ce que** les dispositifs de centrage (9, 10) peuvent être positionnés sans les moitiés de tambour (4, 5) dans une position expansée. La position expansée peut être atteinte par l'expansion du dispositif de fixation de noyau (12) des deux moitiés de tambour (4, 5), les dispositifs de fixation de noyau (12) des moitiés de tambour (4, 5) étant positionnés sous les faces extérieures des parties centrales (7, 8).

17. Dispositif selon l'une quelconque des revendications 5 à 16, **caractérisé en ce que** les parties centrales (7, 8) du tambour de confection de pneumatique (1) sont recouvertes d'un manchon de centrage (16), le manchon de centrage (16) étant relié aux doigts segmentés dans leur zone extérieure.
